# NEUE EUROPÄISCHE PATENTSCHRIFT

(11) **EP 1 941 171 B2**
(45) Veröffentlichungstag und Bekanntmachung des Hinweises auf die Entscheidung über den Einspruch: **14.03.2018**
(45) Hinweis auf die Patenterteilung: 19.11.2014
(21) Anmeldenummer: 06828820.8
(22) Anmeldetag: 15.10.2006
(51) Int. Cl.: F16D 21/06, F16D 1/08

(54) **KOPPLUNGSEINRICHTUNG ZUR ÜBERTRAGUNG EINES DREHMOMENTS**
COUPLING DEVICE FOR TRANSMITTING A TORQUE
DISPOSITIF D'ACCOUPLEMENT SERVANT A TRANSMETTRE UN COUPLE DE ROTATION

(30) Priorität: 17.10.2005 DE 102005049913; 14.11.2005 DE 102005054526; 02.12.2005 DE 102005057871; 02.03.2006 DE 102006010278
(43) Veröffentlichungstag der Anmeldung: 09.07.2008
(60) Teilanmeldung: 14164967.3
(73) Patentinhaber: BorgWarner, Inc., Auburn Hills, MI 48326-2872 (US)
(72) Erfinder: SCHÄFER, Michael, 68775 Ketsch (DE); BÖLLING, Jochen, 76534 Baden-Baden (DE); STRAUSS, Dietmar, 76703 Kraichtal (DE); EBNER, Till, 64342 Seeheim-Jugenheim (DE); HEINRICH,Johannes, Dr., 61381 Friedrichsdorf (DE)
(74) Vertreter: Westphal, Mussgnug & Partner Patentanwälte mbB
(86) Internationale Anmeldenummer: PCT/EP2006/009963
(87) Internationale Veröffentlichungsnummer: WO 2007/045418

(56) Entgegenhaltungen:
- WO-A-2005/121581
- DE-A1- 10 205 767
- DE-A1- 10 227 396
- FR-A1- 2 629 166
- GB-A- 276 000
- JP-A- 6 058 341
- US-A- 1 803 995
- US-A- 2 625 415
- US-A- 4 875 796
- US-A- 5 674 026
- US-A1- 2003 083 136
- US-B1- 6 257 798

## Beschreibung

Die Erfindung bezieht sich auf eine Kupplungs-Kopplungseinrichtung zur Übertragung eines Drehmoments zwischen einem Antriebselement und einer Kupplung gemäß Oberbegriff des Anspruchs 1, wie sie aus der DE 102 05 767 A1 bekannt ist. Derartige Kopplungseinrichtungen werden beispielsweise in Kraftfahrzeugen zur Verbindung zwischen einem Verbrennungsmotor und einer Kupplung verwendet. Die Kupplung stellt schaltbar eine Verbindung zu einem Getriebe dar, das seinerseits für den Antrieb der Räder des Kraftfahrzeugs sorgt.

Weitere Kupplungen sind beispielsweise aus der EP 1195537 B1 oder auch aus der EP 1522753 A1 bekannt.

Die bekannten Kupplungen sind beispielsweise als Doppelkupplung ausgestaltet, die ein schnelles Schalten des Getriebes ermöglicht und mittels einer Hydraulik betätigbar ist.

Die Kupplungen weisen oft Torsionsdämpfer in Form von ringförmigen Federeinrichtungen auf, wobei das Drehmoment in Umfangsrichtung mittels der Federelemente zwischen einer Antriebsseite und einer Abtriebsseite übertragen wird. Die Federelemente fangen einerseits Stöße ab und dämpfen andererseits antriebsseitige Vibrationen, welche beispielsweise von dem Verbrennungsmotor herrühren.

Die Ankopplung einer derartigen Kupplung an ein Antriebselement geschieht typischerweise mittels einer ersten, häufig als Flansch bezeichneten Welle, und einer zweiten, diese umgebenden Welle, die formschlüssig derart gekoppelt sind, dass zwischen ihnen eine Drehbewegung übertragbar ist. Die zweite Welle wird dabei ebenfalls oftmals als Flansch bezeichnet. Da die beschriebene Kopplung jedoch gewisse Relativbewegungen zulassen muss und auch montagefreundlich ausgestaltet ist, weist sie ein gewisses Spiel auf, z. B. ein Fügespiel, das beim Betrieb zur Entwicklung von Geräuschen führt.

Der Erfindung liegt nun die Aufgabe zugrunde, bei einer Kopplungseinrichtung der eingangs genannten Art die Geräuschentwicklung zu verringern oder zu vermeiden und hierfür eine konstruktiv einfache und möglichst aufwandsgünstige Lösung zu finden.

Die Aufgabe wird erfindungsgemäß durch eine Kopplungseinrichtung mit den Merkmalen des Patentanspruchs 1 gelöst. Vorteilhafte Ausgestaltungen sind in den Unteransprüchen angeführt.

Durch wenigstens ein elastisches Element wird eine Vorspannung in der formschlüssigen Verbindung zwischen den beiden Wellen erzeugt, die ein Klappern und die entsprechende Geräuschentwicklung bei Laständerungen verhindert oder zumindest verringert. Dabei wird die Vorspannung in einer Größenordnung gehalten, die die eigentliche Drehmoment- beziehungsweise Kraftübertragung in der formschlüssigen Verbindung nicht behindert und auch die Montage nicht erschwert, jedoch so groß ist, dass das erfindungsgemäße Ziel erreicht wird. Typischerweise werden mittels des wenigstens einen elastischen Elements Vorspannungen im Bereich zwischen 10 Nm und 100 Nm erzeugt. Darüber hinaus sind größere Vorspannungen, insbesondere in Antriebssträngen von Lastfahrzeugen oder von Schwerlastantrieben, denkbar.

In der Kopplungseinrichtung kann beispielsweise durch das Spiel der Ausgleich von kleinen Relativbewegungen zwischen der Kupplung und dem Antriebselement ermöglicht werden. Dies soll durch die erzeugte Vorspannung nicht verhindert werden. Dabei ist die Vorspannung im Bezug auf die erste und die zweite Welle in Umfangsrichtung gerichtet, um ein direktes Anliegen entsprechender Flächen der Wellen aneinander zu gewährleisten, so dass Drehbewegungen zumindest in einer Richtung spielfrei übertragen werden können.

Die erste Welle kann zur Herstellung einer formschlüssigen Verbindung eine Außenverzahnung tragen, die in eine Innenverzahnung der zweiten Welle eingreift. Eine derartige Verzahnung stellt eine besonders effektive Möglichkeit dar, um hohe Drehmomente beziehungsweise große Leistungen über eine derartige Kopplungseinrichtung zu übertragen. Bei der Montage können in diesem Fall die erste und die zweite Welle axial aufeinander geschoben werden, da sie im Normalfall ein Spiel aufweisen.

Gemäß einer Ausgestaltungsvariante der Erfindung wird zusätzlich ein Einlageelement eingelegt, das beispielsweise auch ein Verzahnungselement der ersten und/oder der zweiten Welle wenigstens teilweise ersetzen kann. Es kann zum Beispiel ein Zahn der Verzahnung, der sich in axialer Richtung der Wellen über einen gewissen Bereich erstreckt, durch ein elastisches Element ganz oder teilweise ersetzt sein. Zu diesem Zweck kann an der Stelle, an der in Umfangsrichtung unter normalen Umständen ein Zahn an der ersten oder zweiten Welle vorgesehen sein müsste, eine Ausnehmung vorgesehen sein, in die das elastische Einlageelement eingebracht werden kann, wobei dieses in der jeweils anderen Welle ebenfalls in eine Ausnehmung eingreift und somit eine Nut-Feder-Verbindung herstellt. Das Einlageelement kann dann als Blattfeder oder allgemein als Federblech ausgebildet sein und eine entsprechende Form aufweisen, die in radialer und/oder tangentialer Richtung der Verzahnung elastisch komprimierbar ist.

In dem Falle von Federblechen, die in den Verzahnungszwischenraum eingebracht werden, können diese sinnvoll am Umfang der Verzahnung symmetrisch verteilt werden, um Unwuchten zu begrenzen und die übertragenen Kräfte optimal zu verteilen. Für eine Vereinfachung der Montage und der Stabilität der Anordnung kann es sinnvoll sein, mehrere Federbleche an einem Ring zu befestigen, so dass sie mittels des Rings in die Verzahnung einschiebbar oder besser noch vor dem Zusammenstecken der Verzahnung mit einer der Verzahnungen, entweder der Außen-oder der Innenverzahnung verbunden werden können. Die Federbleche können dann entweder an in Umfangrichtung gleichsinnig gerichteten Zahnflanken anliegen oder auch teilweise an entgegengesetzt gerichteten Flanken. Im letzteren Fall kann die Federblechanordnung sich mitsamt dem Ring selbsttätig zentrieren, im ersten Fall kann es vorteilhaft sei, den Ring in Umfangsrichtung derart vorzuspannen, dass die Federbleche gegen die entsprechenden Flanken gedrückt werden.

Die einzelnen Federbleche sind derart in Axialrichtung der Wellen oder in Radialrichtung gebogen, dass sie an den Zahnflanken anliegen, jedoch elastisch weiter auf diese hin drückbar sind. Das Maß der Biegung hängt von der gewünschten Vorspannung bzw. von dem Drehmoment ab, das im Normalfall klapperfrei zu übertragen ist. Anstelle der Federbleche können grundsätzlich auch andersartige federnde Elemente gewählt werden, beispielsweise materialelastische Elemente.
Jedes Federblech kann an seinem dem Ring in Axialrichtung der Wellen abgewandten Ende jeweils ein Winkelblech tragen, das den jeweiligen Zahn, an dem das Federblech anliegt, zu dessen Stirnseite hin umgreift. Durch diese hakenförmige Gestaltung der Federbleche kann, wenn die Verzahnung nach dem Einbringen der Federbleche gesteckt wird, das Zusammenstecken nicht durch freie Enden der Federbleche behindert werden.
Grundsätzlich ist zu bemerken, dass auch bei einer anderen Art einer formschlüssigen Verbindung zweier Wellen mehrere elastische Elemente zur Einfügung zwischen die Elemente der Verbindung räumlich verteilt an einem gemeinsamen Tragelement befestigt sein können, um die Anordnung zu stabilisieren und einfach montierbar zu machen.

Die Kopplungseinrichtung ist auf der Seite des Antriebselements mit diesem entweder über eine Taumelscheibe und/oder über eine Schwungscheibe oder direkt verbunden. Auf der Abtriebsseite kann die Kopplungseinrichtung mit einem Torsionsdämpfer verbunden sein, der beispielsweise ringförmig koaxial zu der Kupplung angeordnet sein kann.

Die Erfindung wird nachfolgend anhand einer Zeichnung gezeigt und anschließend beschrieben.

Dabei zeigt
- Figur 1: prinzipiell die Funktion einer Kupplung mit einem Torsionsdämpfer, der mit einer erfindungsgemäßen Kopplungseinrichtung verbunden ist,
- Figur 2: eine Kopplungseinrichtung, die unmittelbar an eine Schwungscheibe eines Antriebselements angekoppelt ist,
- Figur 3: in einer schematischen Darstellung eine Verzahnung zwischen der ersten und der zweiten Welle samt Vorspannelement,
- Figur 4: einen Querschnitt durch die erste und die zweite Welle, nicht zur Erfindung gehörend,
- Figur 5: im Detail die Verzahnung zwischen der ersten und der zweiten Welle, unter Zwischenlage eines Einlageelementes, nicht zur Erfindung gehörend,
- Figur 6: eine ähnliche Darstellung wie Figur 5, wobei das Einlageelement eine andere Gestalt aufweist,
- Figur 7: eine schematische Darstellung der Verzahnung, wobei als Einlageelement ein O-Ring vorgesehen ist, nicht zur Erfindung gehörend,
- Figur 8: eine schematische Darstellung einer Welle mit Aussenverzahnung
- Figur 9: eine Kerbverzahnung mit einem Einlageelement
- Figur 10: einen Ring mit daran befestigten Federelementen
- Figur 11a: eine abgerollte Darstellung einer Verzahnung mit Federelementen
- Figur 11b: die Darstellung aus Figur 11a mit von der Verzahnung gelösten Federblechen
- Figur 12: einen Ring wie in Figur 10 mit zusätzlichen Elementen zum Aufbringen einer Vorspannung in Umfangsrichtung
- Figur 13: eine abgerollte Darstellung einer Verzahnung mit Federelementen mit Winkelblechen
- Figur 14: eine Darstellung wie in Figur 13 mit gegensinnig (an gegensinnig ausgerichteten Zahnflanken) angeordneten Federelementen
- Figur 15: eine perspektivische Darstellung der Anordnung aus Figur 14
- Figur 16: eine Querschnitts- Darstellung der Verzahnung mit eingelegtem Ring mit Federblechen.

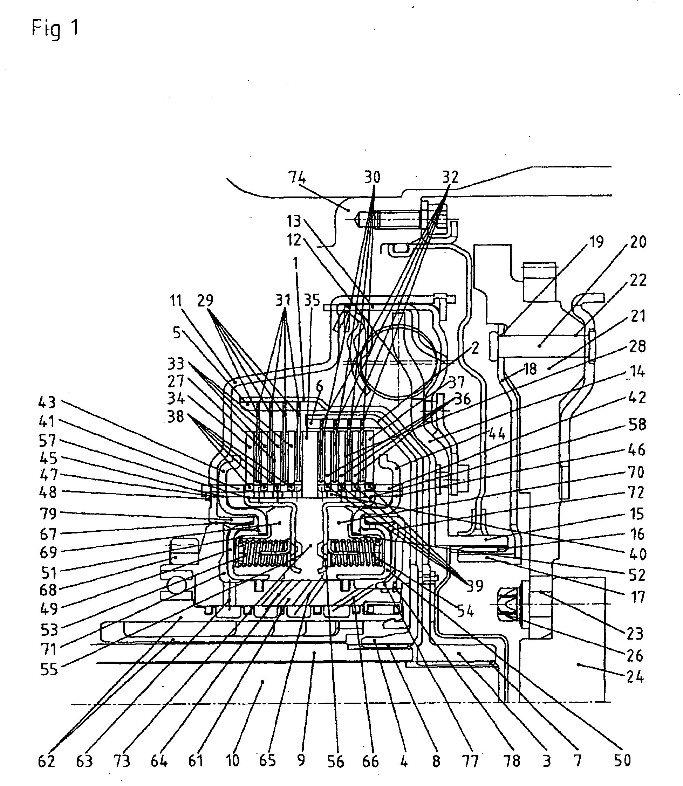

Die Figur 1 verdeutlicht anhand eines Ausschnittes aus einem beispielhaft gewählten Antriebsstrang für ein Kraftfahrzeug einen möglichen Grundaufbau und die Funktionsweise einer erfindungsgemäß gestalteten Doppelkupplung.

Auf der rechten Seite der Zeichnungsfigur ist eine Kurbelwelle 24 angedeutet, welche beispielsweise mit einer Verbrennungskraftmaschine, einem Motor oder dergleichen gekoppelt ist. Diese Seite stellt die Antriebsseite des Antriebsstrangs dar.

Auf der linken Seite des Zeichnungsblattes sind zwei Getriebeeingangswellen, nämlich eine Zentral- oder Vollwelle 10 und eine Hohlwelle 9 zu sehen, welche aus der Kupplungsglocke 74 der Doppelkupplung herausgeführt sind und beispielsweise mit einem hier nicht dargestellten Getriebe oder dergleichen gekoppelt sind. Diese Seite stellt die Abtriebsseite des Antriebsstrangs dar.

So kann beispielsweise die erste Getriebeeingangswelle (Zentral- oder Vollwelle 10) zum Betrieb aller ungeraden Gänge (z. B. 1, 3, 5 ...) und die zweite Getriebeeingangswelle (Hohlwelle 9) zum Betrieb aller geraden Gänge (z. B. 2, 4, 6 ...) des Kraftfahrzeugs vorgesehen sein. Der Rückwärtsgang könnte sowohl der ersten Getriebeeingangswelle (Zentral- oder Vollwelle 10), als auch der zweiten Getriebeeingangswelle (Vollwelle 9) des Getriebes zugeordnet sein.

Der Antriebsstrang umfasst ferner eine Schwungmasse 21 in Form einer Schwungscheibe, eine biege-/taumelweiche Scheibe 18 (Taumelscheibe), einen Torsionsschwingungsdämpfer 12 sowie die vorstehend genannte Doppelkupplung.

Dieser Antriebsstrang wird von einem äußeren Gehäuse umschlossen. Dieses äußere Gehäuse wird durch die Kupplungsglocke 74 gebildet. Diese Kupplungsglocke 74 umschließt folglich die beiden als nasslaufende Lamellenkupplungen ausgeführten Kupplungen, den Drehschwingungsdämpfer 12, die biege- und/oder taumelweiche Scheibe 18 sowie die Schwungmasse 21.

Der Dreh- oder Torsionsschwingungsdämpfer 12 ist in an sich bekannter Art und Weise ausgebildet. Eingangsseitig weist er ein Primärelement 14 in Form einer Halbschale auf. Ausgangsseitig ist ein Sekundärelement bestehend aus einer ersten Halbschale 13 und einer zweiten Halbschale 11, welche zugleich das Kupplungsgehäuse bildet, vorgesehen. Primärelement 14 und Sekundärelement 13, 11 sind über eine Mehrzahl von an dem Außenumfang des Drehschwingungsdämpfers 12 angeordnete Federpakete in Drehrichtung ein Drehmoment übertragbar gekoppelt. Exemplarisch ist ein Federpaket in der Zeichnung dargestellt. Die beiden Halbschalen 11 und 14 des Torsionsschwingungsdämpfers 12 umschließen die beiden einzelnen Kupplungen der Doppelkupplung. Sie sind mittels einer Axialverzahnung drehfest gekoppelt und werden beispielsweise durch eine Tellerfeder axial unter Erzeugung eines zusätzlichen Reibschlusses zusammengedrückt.

Jede Kupplung umfasst jeweils einen Außenlamellenträger 1, 2 und einen gemeinsamen Innenlamellenträger 40. Der Außenlamellenträger der ersten Kupplung wird nachfolgend als erster Außenlamellenträger 1, der Außenlamellenträger der zweiten Kupplung wird im Folgenden als zweiter Außenlamellenträger 2 bezeichnet.

Die beiden Außenlamellenträger 1, 2 sind halbschalenförmig ausgebildet, wobei der erste Außenlamellenträger 1 den zweiten Außenlamellenträger 2 in axialer Richtung überragend umgreift. Der Innenlamellenträger 40 weist eine im Wesentlichen zylinderförmige Gestalt auf und erstreckt sich über die axial verlaufenden Bereiche der Halbschalen 1, 2.

Die beiden Außenlamellenträger 1, 2 weisen Innenverzahnungen 5, 6 auf, welche zur axial verschieblichen aber im Wesentlichen drehfesten Führung von im vorliegenden Fall jeweils vier entsprechende Außenverzahnungen 31, 32 aufweisenden Reiblamellen 29, 30 dienen. Letztere werden üblicherweise auch als Außenlamellen 29, 30 bezeichnet.

In entsprechender Weise sind am Außenumfang der den jeweiligen Außenlamellenträgern 1, 2 zugeordneten Innenlamellenträgerabschnitten des gemeinsamen Innenlamellenträgers 40 Außenverzahnungen 41, 42 angeordnet, in denen Innenverzahnungen aufweisende Reiblamellen, die sogenannten Innenlamellen 36, axial verschieblich aber drehfest geführt sind. Die beiden Innenlamellenträgerabschnitte werden durch eine gemeinsame Endplatte 35 voneinander getrennt.

An den beiden äußeren Enden des gemeinsamen Innenlamellenträgers 40 sind jeweils Druckplatten 34, 37 in gleicher Weise wie die vorstehend genannten Innenlamellen 36 axial verschieblich aber im Wesentlichen drehfest geführt.

Die äußeren Reiblamellen/Außenlamellen 29, 30, die inneren Reiblamellen/Innenlamellen 33, 36 sowie die beiden Druckplatten 34, 37 und die gemeinsame Endplatte 35 greifen wechselseitig verzahnungsartig in an sich bekannter Weise jeweils ein einer Kupplung zugeordnetes Lamellenpaket 27, 28 bildend ineinander.

Die beiden Lamellenpakete 27, 28 mit den entsprechenden Reiblamellen 29, 30, 33, 34, 35, 36, 37 sind somit auf dem gemeinsamen Innenlamellenträger 40 in axialer Richtung hintereinanderliegend angeordnet. Im vorliegenden Ausführungsbeispiel sind die Reibflächen aller Reiblamellen 29, 30, 33, 34, 35, 36, 37 im Wesentlichen gleich groß, sodass die einzelnen Kupplungen eine gleichwertige Leistungsfähigkeit aufweisen. Selbstverständlich ist es auch möglich, dass die Reibflächen der Reiblamellen verschieden große Durchmesser aufweisen.

Bestandteile der Kupplungen sind ferner nachfolgend im Detail beschriebene Kolben-/Zylindereinheiten, welche zur Betätigung der Kupplungen dienen. Insbesondere ist jeder Kupplung ein hydraulisch betätigbarer Betätigungskolben 43, 44 zugeordnet. Jeder dieser Betätigungskolben 43, 44 kann gegen eine der Druckplatten 34, 37 kraftübertragend und Reibschluss zwischen den einzelnen Reiblamellen 29, 30, 33, 34, 35, 36, 37 erzeugend und damit die jeweilige Kupplung betätigend gedrückt werden.

Wie sich der Figur 1 entnehmen lässt, werden die beiden Kupplungen nach innen gerichtet betätigt, wobei die Reaktionskräfte gegen die gemeinsame Endplatte 35 wirken.

Der gemeinsame Innenlamellenträger 40 durchsetzt die beiden zur Betätigung der Kupplungen notwendigen ringförmigen Betätigungskolben 43, 44. Zu diesem Zweck weist der Innenlamellenträger jeweils endseitig über dem Außenumfang im Wesentlichen axial verlaufende Stege auf, welche entsprechende Öffnungen 45, 46 der jeweiligen Betätigungskolben 43, 44 verzahnungsartig durchgreifen. Einendseitig durchgreifen diese Stege auch korrespondierend hierzu im Kupplungsgehäuse 11 vorgesehene Öffnungen 47. Die Öffnungen 47 im Kupplungsgehäuse 11 (sowie in der Regel auch die Öffnungen 45, 46 in den Betätigungskolben 43, 44) sind in ihren Umfangsabmessungen so aufeinander abgestimmt, dass eine Relativverdrehung nicht möglich ist. Der Innenlamellenträger 40 ist auf diese Weise drehfest mit dem Kupplungsgehäuse 11 verbunden.

Um eine axiale Verschiebung des Innenlamellenträgers 40 zu verhindern, ist ein Sicherungsring 48 vorgesehen, welcher den Innenlamellenträger 40 am Kupplungsgehäuse 11 fixiert hält.

Das Kupplungsgehäuse 11 ist an einer Nahtstelle 67 starr mit einer Kupplungsnabe 61 verbunden. Diese Kupplungsnabe 61 umgreift die beiden Getriebeeingangswellen 9, 10 koaxial. Die Kupplungsnabe 61 trägt einen halbschalenförmigen Zylinder 77. Dieser Zylinder 77 ist mittels eines Sicherungsrings 78 in seiner Axialverschiebung begrenzt.

Bestandteil des Kupplungsgehäuses 11 ist ein Zylinder 79 in zu dem Zylinder 77 korrespondierender Art. An den beiden Zylindern 77, 79 sind die jeweiligen Betätigungskolben 43, 44 axial verschieblich geführt. Zylinder 77 und Betätigungskolben 44 dienen als Abstützung und Zentrierung für den Innenlamellenträger 40.

Die Betätigungseinrichtungen für die beiden Kupplungen umfassen neben den vorerwähnten Betätigungskolben 43, 44, mittels derer die jeweiligen Druckplatten 34, 37 der Lamellenpakete 27, 28 in Richtung der gemeinsamen Endplatten 35 verschoben werden können, jeweils einen Druckkolben 49, 50, einen Kolben 51, 52, einen Ausgleichskolben 55, 56 sowie eine Mehrzahl in Umfangsrichtung angeordneter Schraubenfedern 53, 54. Die jeweiligen Betätigungskolben 43, 44 stützen sich nach außen gegen die jeweiligen Druckkolben 49, 50 ab, welche axial verschieblich an den Zylindern 79, 77 und am Außenumfang der Kupplungsnabe 61 geführt sind. Nach innen gerichtet stützen sich die Betätigungskolben 43, 44 gegen die Kolben 51, 52 ab. Diese wiederum stützen sich nach innen gerichtet gegen die Schraubenfedern 53, 54 ab. Die Schraubenfedern 53, 54 sind nach innen gerichtet gegen die Außenflächen der Kompensationskolben 55, 56 abgestützt. Diese Kompensationskolben 55, 56 stützen sich mit deren Innenflächen gegen radial nach innen gerichtete umlaufende Umfangsstege 57, 58 am Innenlamellenträger 40 ab.

Obwohl das gesamte Kupplungssystem unmittelbar auf der zweiten Getriebeeingangswelle (Hohlwelle 9) gelagert werden könnte, ist bei der vorliegenden Ausführungsform ein separates flanschartiges Bauteil, nachfolgend als Träger 62 bezeichnet, vorgesehen, welches die beiden Getriebeeingangswellen, die Hohlwelle 9 und die Vollwelle 10, koaxial umgreift und auf welchem die Kupplungsnabe 61 drehbar gelagert ist. Zur Lagerung der Kupplungsnabe 61 auf dem Träger 62 werden vorliegend Gleitlager verwendet. Als Alternative für reduzierte Reibmomente können Wälzlager (Nadellager) verwendet werden.

Der Träger 62 kann einteilig oder sowohl axial als auch radial mehrteilig ausgeführt sein. Im vorliegenden Fall ist der Träger 62 zweiteilig ausgeführt. Er besteht aus einem Mantel und einer von diesem umschlossenen Buchse. Die zylindermantelförmige Buchse weist in deren Aüßenumfang in axialer Richtung verlaufende, unterschiedlich lange Längsnuten auf. Der Mantel weist korrespondierend zur Anordnung der vorerwähnten Längsnuten vier in Umfangsrichtung verlaufende Nuten auf. Diese Umfangsnuten sind über radial verlaufende hier nicht dargestellte Öffnungen mit den entsprechenden Längsnuten verbunden. Korrespondierend zu den Umfangsnuten weist die Kupplungsnabe 61 vier im Wesentlichen radial und zum Teil axial geneigt verlaufende Öffnungen auf, welche nachfolgend als Hydraulikflüssigkeitskanäle 63, 64, 65 und 66 bezeichnet sind. Über diese Hydraulikflüssigkeitskanäle 63, 64, 65, 66 erfolgt eine Versorgung der durch die Kolben 43, 44, 49, 50, 55, 56 gebildeten Volumina (erster Hydraulikflüssigkeitsbetätigungsraum 71, zweiter Hydraulikflüssigkeitsbetätigungsraum 72, erster Hydraulikflüssigkeitsausgleichsraum 69, zweiter Hydraulikflüssigkeitsausgleichsraum 70, Kühlflüssigkeitsraum 73) mit Hydraulikflüssigkeit.

Über den ersten Hydraulikflüssigkeitskanal 63 kann der erste Hydraulikflüssigkeitsbetätigungsraum 71 mit Hydraulikflüssigkeit druckbeaufschlagt werden. Dieser Hydraulikflüssigkeitsdruck drückt den Druckkolben 49 und damit den Betätigungskolben 45 und den Kolben 51 entgegen dem Druck der Schraubenfedern 53 nach innen. Eine derartige Verschiebung des Betätigungskolbens 45 hat zur Folge, dass dessen Außenumfang gegen die Druckplatte 34 der ersten Kupplung diese betätigend gedrückt wird.

In gleicher Weise kann über den vierten Hydraulikflüssigkeitskanal 66 der zweite Hydraulikflüssigkeitsbetätigungsraum 72 mit Hydraulikflüssigkeit druckbeaufschlagt werden. Auf Grund dieses Hydraulikflüssigkeitsdrucks wird der Druckkolben 50 und damit der Betätigungskolben 44 und der Kolben 52 entgegen dem Druck der Schraubenfedern 54 nach innen gedrückt. Dies hat in entsprechender Weise zur Folge, dass der Außenumfang des Betätigungskolbens 44 gegen die Druckplatte 37 der zweiten Kupplung diese betätigend gedrückt wird.

Über die beiden Hydraulikflüssigkeitskanäle 64 und 65 werden einerseits die Hydraulikflüssigkeitsausgleichsräume 69, 70 als auch der Kühlflüssigkeitsraum 73 mit Hydraulikflüssigkeit befüllt.

Die Hydraulikflüssigkeit in den Hydraulikflüssigkeitsausgleichsräumen 69, 70 dient dazu, einen fliehkraftbedingten Hydraulikflüssigkeitsgegendruck zu erzeugen, welcher der fliehkraftbedingten Druckzunahme im jeweiligen Hydraulikflüssigkeitsbetätigungsraum 71, 72 entgegen wirkt.

Die Hydraulikflüssigkeit im Kühlflüssigkeitsraum 73 wird zur Kühlung der Reiblamellen 29 30 33, 34, 35, 36, 37 durch radial verlaufende (hier nicht dargestellte) Öffnungen im Innenlamellenträger 40 zu den Reiblamellen 29, 30, 33, 34, 35, 36, 37 geführt.

Die vorstehend im Detail beschriebenen Komponenten des Antriebsstranges sind wie folgt miteinander verbunden. Die Kurbelwelle 24 ist mit dem Innenumfang der Schwungmasse 21 verschraubt (Schraube 26, Bohrung 23). Der Außenumfang der Schwungmasse 21 ist mit dem Außenumfang der biege-/taumelweichen Scheibe 18 vernietet (Außenrandbohrung 19, Niete 20, Bohrung 22). Der Innenumfang der biege-/taumelweichen Scheibe 18 trägt eine, auch als Innenflansch bezeichnete erste Welle 17 mit einer Außenverzahnung. Diese Außenverzahnung greift in der Art einer Steckverzahnung 16 in eine Innenverzahnung der zweiten Welle 15, die mit dem Primärelement 14 des Torsionsschwingungsdämpfers 12 verbunden ist und daher teilweise auch als Primärflansch bezeichnet wird.

Das Sekundärelement 13 des Torsionsschwingungsdämpfers 12, welches zugleich das Kupplungsgehäuse bildet, ist in vorstehend beschriebener Weise drehfest mit dem Innenlamellenträger 40 der Doppelkupplung verbunden.

Die beiden Kupplungen (Lamellenpakete 27, 28; Betätigungskolben 44, 45) verbinden den Innenlamellenträger 40 schaltbar mit den Außenlamellenträgern 1, 2, welche wiederum über deren Flansche 3, 4 mittels Steckverzahnung 7, 8 drehfest mit den beiden Getriebeeingangswellen 9, 10 verbunden sind.

Ein über die Kurbelwelle 24 eingeleitetes Drehmoment kann also mittels der Doppelkupplung auf eine der beiden Getriebeeingangswellen 9, 10 übertragen werden.

Der Vollständigkeit halber sei erwähnt, dass eine über die Kurbelwelle 24 eingeleitete Drehbewegung über ein an der Kupplungsnabe 61 angeordnetes Pumpenantriebszahnrad 68 auch eine hier nicht dargestellte Hydropumpe zur Bereitstellung des vorstehend erwähnten Hydraulikflüssigkeitsdrucks antreibt.

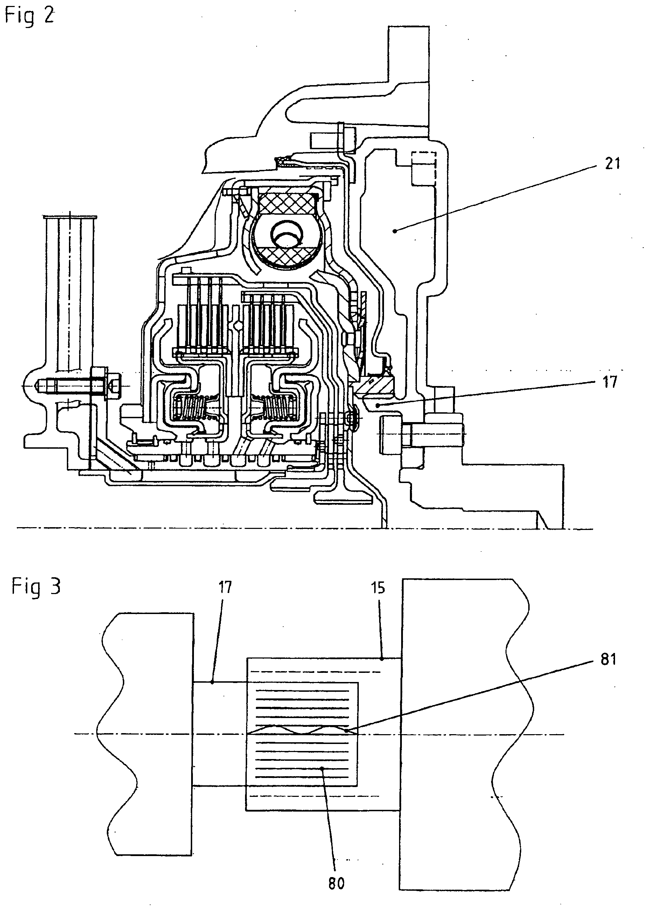

Figur 2 zeigt eine Kopplungseinrichtung ähnlich der in Figur 1 dargestellten, wobei jedoch gegenüber der in Figur 1 gezeigten Konstruktion die erste Welle nicht mit der taumelweichen Scheibe 18 sondern unmittelbar mit der Schwungmasse 21 verbunden ist. Eine taumelnde Scheibe ist in dieser Konstruktion nicht vorgesehen.

Figur 3 zeigt in einer vergrößerten Ausschnittsdarstellung schematisch die erste Welle 17 und die zweite Welle 15. Die erste Welle 17 trägt eine Außenverzahnung 80, die in eine nicht näher dargestellte Innenverzahnung der zweiten Welle 15 eingreift. Schematisch ist eine Blattfeder 81 aus Federstahl dargestellt, die in die Verzahnung eingelegt ist und die derart doppel-S-förmig gebogen ist, dass sie eine Vorspannung in Umfangsrichtung zwischen die Innenverzahnung und Außenverzahnung einbringt.

Die Blattfeder 81 kann beim axialen Zusammenschieben der ersten und der zweiten Welle mit eingeschoben werden und weist eine derartige Vorspannung auf, dass die beiden Wellen unter Aufgabe des Spiels in Umfangsrichtung zusammengedrückt werden.

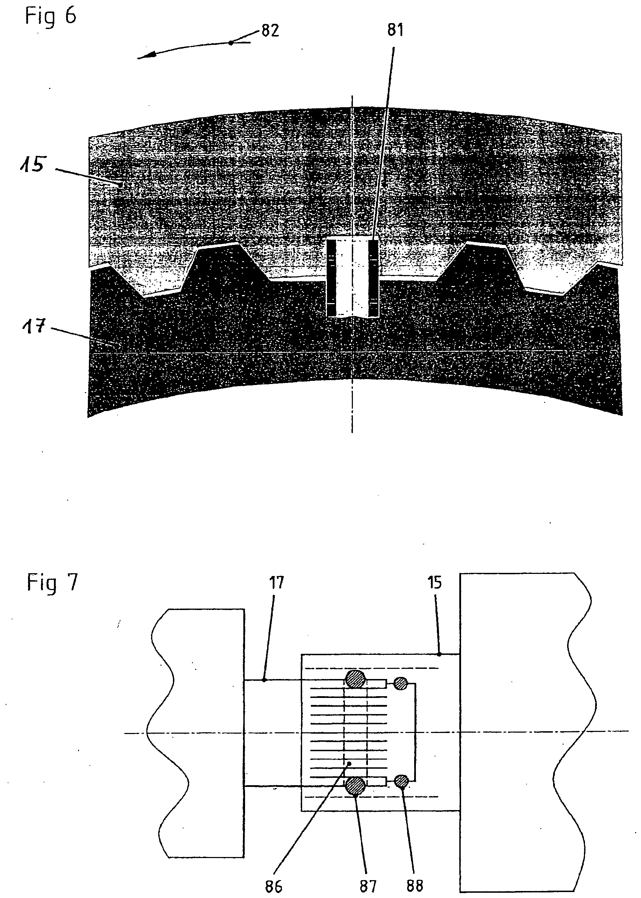

In der Figur 6 ist diese Anordnung in einem Querschnitt gezeigt, wobei eine Nut in der ersten Welle 17 in axialer Richtung verlaufend zwischen zwei Zähnen der Verzahnung angeordnet ist sowie eine parallel zu dieser verlaufende weitere Nut in der inneren Mantelfläche der ersten Welle 15. Die Blattfeder 81 greift in beide Nuten ein und richtet diese zueinander derart aus, dass eine Relativbewegung im Umfangsrichtung, die mit dem Pfeil 82 angedeutet ist, zu einer weiteren Verformung der Blattfeder führen würde, wodurch elastische Rückstellkräfte entstehen. Somit werden die beiden Wellen derart miteinander verbunden, dass sie bis zum Übersteigen einer bestimmten in Umfangsrichtung wirkenden Kraft fest zueinander positioniert sind. Wird diese Kraft überschritten, so wird die Blattfeder verformt und die beiden Wellen können sich soweit gegeneinander verdrehen, dass die Verzahnungen in der einen oder anderen Drehrichtung aneinander anliegen.

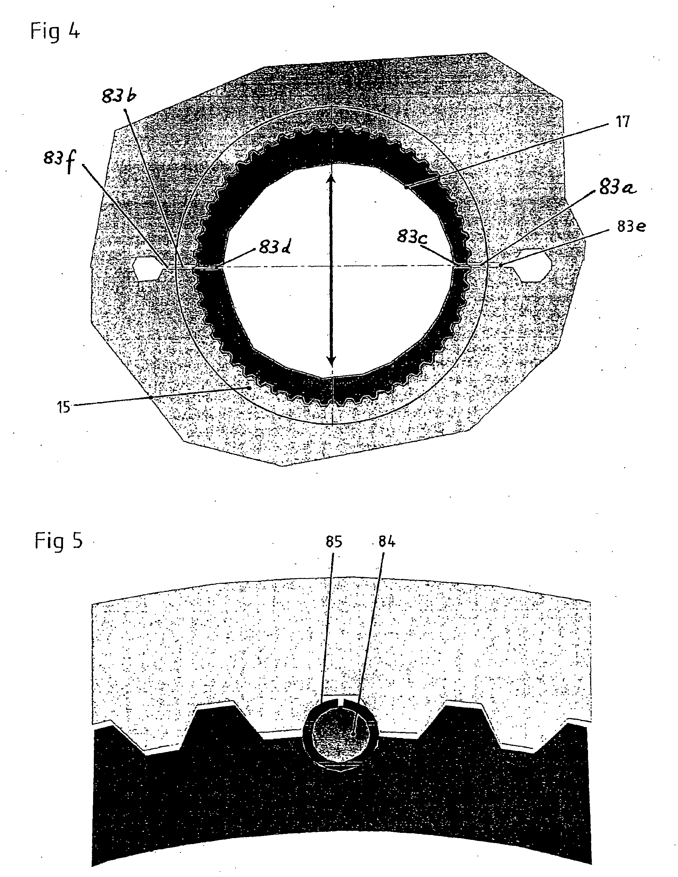

Die Figur 4 zeigt eine nicht zur Erfindung gehörende Ausführungsform der Erfindung, bei der die zweite Welle 15 dadurch elastisch ausgebildet ist, dass in ihr ein Paar diametral gegenüberliegender in radialer und axialer Richtung verlaufender Schlitze 83a, 83b vorgesehen ist. Dieses Schlitzpaar 83a, 83b erlaubt eine radiale Aufweitung der zweiten Welle 15, so dass die erste Welle 17, auch wenn ihre Außenmaße ein wenig über den Innenmaßen der zweiten Welle liegen, in diese unter elastischer Aufweitung der zweiten Welle 15 eingeschoben werden kann. Dadurch liegt eine radiale Pressung vor, die zum Ausgleich des vorhandenen Spiels in radialer Richtung führt, so dass ein Klappern der Wellen gegeneinander verhindert wird. In Umfangsrichtung ergeben sich Reibungskräfte, die nur im Falle einer Laständerung eines bestimmten Ausmaßes überwunden werden. Jedenfalls wird die Übertragung des Drehmoments durch die Elastizität der zweiten Welle nicht beeinträchtigt. In der Figur 4 ist dargestellt, dass auch die erste, innenliegende, Welle 17 ein entsprechendes Paar von Schlitzen 83c, 83d aufweist. Dies ist nicht notwendigerweise der Fall, es können jedoch beide Wellen 15, 17 oder auch nur eine, die äußere 15 oder die innere 17 Welle, ein derartiges Schlitzpaar aufweisen, um eine radiale Aufweitung beziehungsweise eine radiale Zusammenstauchung zu erlauben.

Zur elastischen Ausbildung der ersten und/oder zweiten Welle können weitere Schlitzpaare vorgesehen sein, vorzugsweise wiederum diametral gegenüberliegende Schlitzpaare. Ergänzend oder alternativ können zusätzlich einzelne Schlitze vorgesehen sein, die nicht mit einem zweiten Schlitz ein Paar von Schlitzen bilden. Jeder Schlitz kann sich über dies in axialer Richtung über einen Teil oder die gesamte Länge der jeweiligen Welle erstrecken.

In einer bevorzugten Ausgestaltungsvariante der Erfindung sind vier bis sechs Paare aus diametral gegenüberliegenden Schlitzen vorgesehen. Hierbei kann sich wiederum jeder Schlitz in axialer Richtung über einen Teil oder die gesamte Länge der jeweiligen Welle erstrecken.

Wie in Figur 4 dargestellt, ist wenigstens ein Paar von Schlitzen 83e, 83f in dem mit der inneren Welle 17 verbundenen Bauteil, hier der Taumelscheibe 18, vorgesehen. In einer anderen Ausgestaltungsvariante, z.B. der gemäß der Figur 2, kann das Schlitzpaar 83e, 83f in der Schwungmasse 21 vorgesehen sein. Vorzugsweise ist das wenigstens eine Schlitzpaar 83e, 83f in diesem Bauteil kolinear mit einem Schlitzpaar 83a,83b; 83c, 83d in der äußeren 15 oder der inneren 17 Welle angeordnet.

Die beschriebenen Maßnahmen zur Ausbildung wenigstens einer elastischen Welle können alternativ oder auch gleichzeitig mit dem Einfügen eines Einlageelementes in die Verzahnung vorgesehen sein.

Figur 5 zeigt eine weitere, nicht zur Erfindung gehörende alternative Ausgestaltung der Erfindung, dergestalt, dass in die Verzahnung anstelle eines Zahns ein Federstift 84 eingefügt ist, der in axialer Richtung der Wellen verläuft und der aus einem längs geschlitzten Federzylinder 85 aus einem Federblech besteht, der vorzugsweise mit einem kompressiblen Medium oder einem Elastomerkörper gefüllt ist. Der Federstift ist radial zusammendrückbar, so dass er als elastisches Element in zwei Nuten eingelegt werden kann, die, einander gegenüberliegend, axial in der äußeren Mantelfläche der innenliegenden ersten Welle und in der innenliegenden Mantelfläche der außenliegenden zweiten Welle verlaufen. In diesem Fall kann durch den Federstift je nach der Tiefe der Nuten eine radiale und/oder azimutale Vorspannung zwischen der ersten und der zweiten Welle erzeugt werden, so dass diese in jedem Fall wenigstens auf der dem Federstift gegenüberliegenden Seite der Verzahnung fest aneinander anliegen, wodurch der gewünschte Reibschluss erzeugt wird.

Figur 7 zeigt eine schematische, nicht zur Erfindung gehörende Darstellung der ersten und zweiten Welle mit der Verzahnung, wobei in einem ersten Beispiel im axial begrenzten Abschnitt 86 in den einzelnen Zähnen der Außenverzahnung Ausnehmungen vorgesehen sind, in die ein O-Ring 87 eingelegt ist, der die innere Welle vollständig umgibt und der einen derartigen Durchmesser aufweist, dass er zwischen der ersten und der zweiten Welle komprimiert ist und somit eine radiale Vorspannung zwischen den Wellen erzeugt. Der O-Ring 87 besteht typischerweise aus einem Elastomer, das einen hohen Reibungskoeffizient aufweist, so dass die Reibungskräfte zwischen den beiden Wellen relativ groß sind.

Ein zweites Beispiel ist zusätzlich in derselben Figur dargestellt, in Form des O-Rings 88, der alternativ oder gleichzeitig zu dem O-Ring 87 vorgesehen sein kann und der in einem Abschnitt der ersten Welle 17 angeordnet ist, der keine Verzahnung trägt sondern eine glatte zylindrische Oberfläche aufweist, in die lediglich eine Nut zur Aufnahme des O-Rings 88 eingebracht ist.

Auf der Gegenseite kann an der inneren Mantelfläche der zweiten Welle 15 ebenfalls eine Nut vorgesehen sein kann, in die der O-Ring 88 derart eingreift, dass er radial wenigstens ein Stück weit komprimiert ist und somit eine radiale Vorspannung zwischen den Wellen erzeugt.

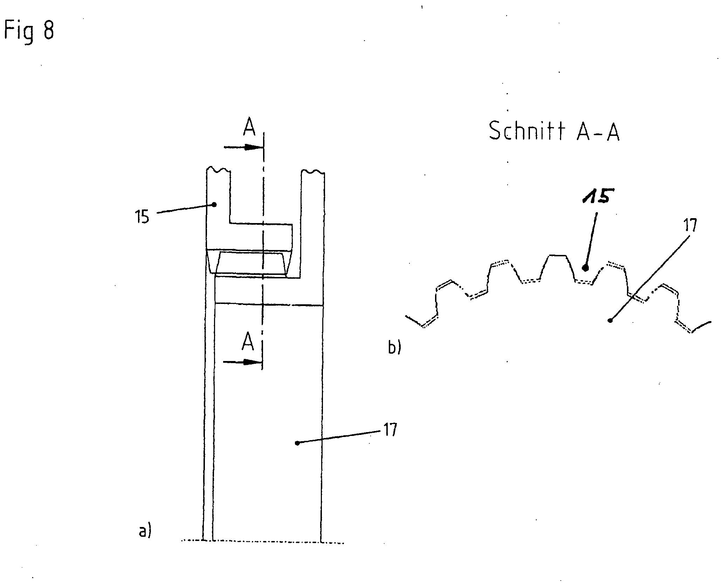

Die Figuren 8 bis 16 zeigen eine spezielle, besonders optimierte Ausgestaltung der Erfindung , bei der Federelemente an einem gemeinsamen Ring derart befestigt sind, dass sie gemeinsam in eine Verzahnung eingebracht werden können, um zwischen den Zähnen einer Innenverzahnung und einer Aussenverzahnung das vorhandene Spiel elastisch aufzunehmen.
Figur 8 zeigt dabei im Teil b) eine Aussenverzahnung in einem Schnitt A-A, der im Teil a) der Figur angedeutet ist. Ohne weitere Maßnahmen führt ein Spiel zwischen der Innen- und der Aussenverzahnung zur Entwicklung von Klappergeräuschen insbesondere bei niedrigen Drehzahlen. Solche Geräusche sollen mithilfe der Erfindung vermieden oder verringert werden. Die erste Welle ist, wie auch in den übrigen Figuren, wieder mit dem Bezugszeichen 17, die zweite Welle mit 15 bezeichnet.

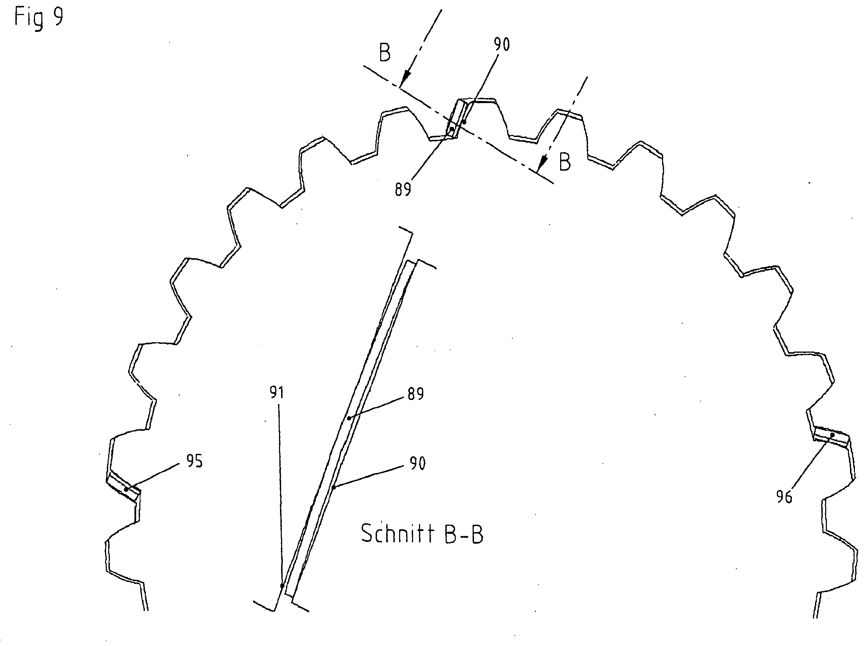

Figur 9 zeigt beispielhaft die Einfügung eines Federblechs 89 zwischen einen Zahn 90 einer Aussenverzahnung und einen Zahn 91 einer Innenverzahnung. Im Schnitt B-B wird deutlich, dass das Federblech 89 bogenförmig in der Mitte der Zahnflanke des Zahns 90 von diesem beabstandet ist und elastisch an die Flanke andrückbar ist. Prinzipiell ist es jedoch gleichwertig, ob die konvexe Fläche des Federblechs gegen die Außen- oder gegen die Innenverzahnung anliegt.
Zusätzlich sind weitere Federbleche 95, 96 am Umfang der Verzahnung gleichmäßig verteilt dargestellt.
Um die Federbleche problemlos unterbringen zu können, kann jeweils ein Zahn der Aussenverzahnung schmaler gestaltet sein oder ein entsprechender Zahn der Innenverzahnung oder der zu schaffende Freiraum kann auf beide Verzahnungen aufgeteilt werden. Bei der Innenverzahnung ist diese Maßnahme jedoch besonders einfach durchzuführen.
Die Wahl der Anzahl der Federelemente, die vorgesehen werden, hängt unter anderem auch von dem zu übertragenden Drehmoment, bis zu dem die Klappergeräusche unterdrückt werden sollen, ab. Jedoch werden die Bleche, um Unwuchten zu vermeiden, vorteilhaft symmetrisch am Umfang angeordnet.

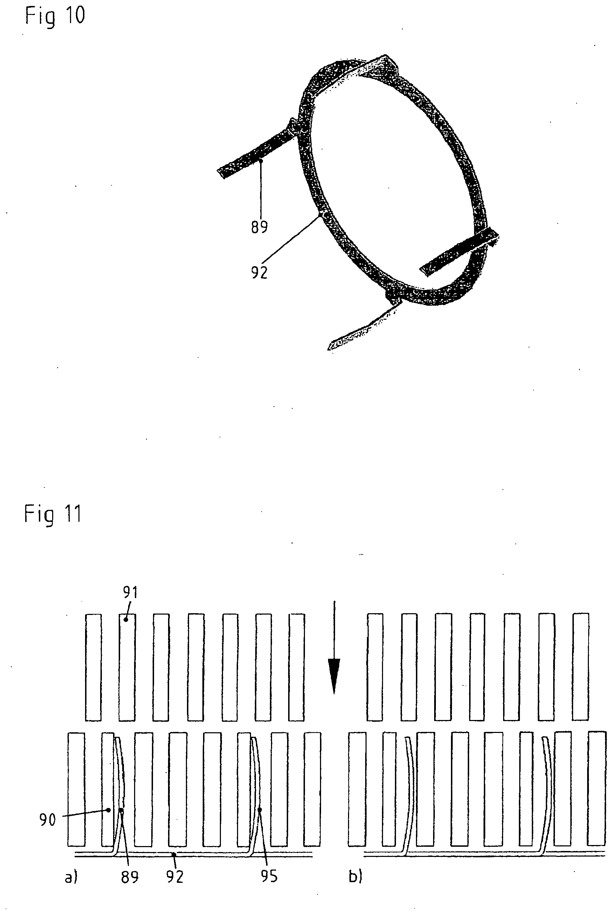

Figur 10 zeigt in einer perspektivischen Ansicht eine Anordnung von 4 Federblechen, die an einem gemeinsamen Ring 92 befestigt und dadurch fest zueinander positioniert sind. Mittels des Rings 92 sind die Federbleche gemeinsam in die Verzahnung einschiebbar und dort festlegbar.

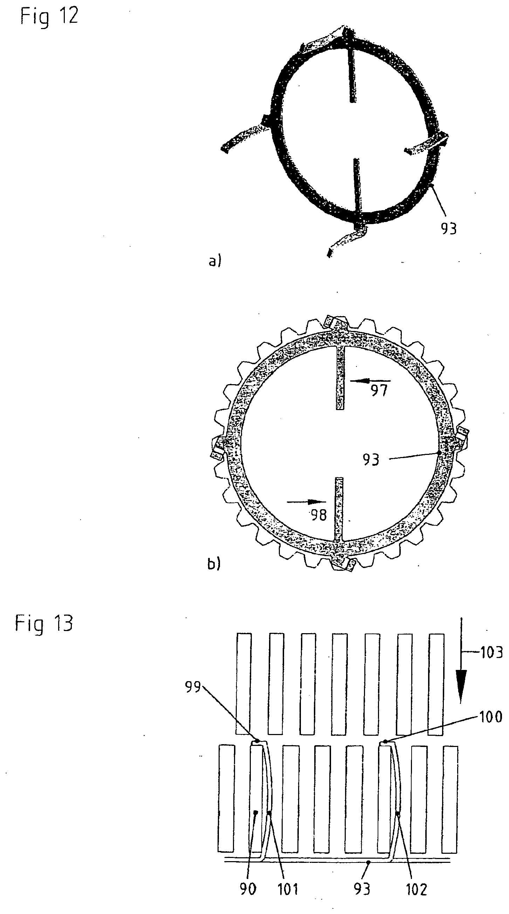

Die Figuren 11a und 11b zeigen abgerollte Darstellungen der Innen- und der Aussenverzahnung vor dem Einsteckvorgang. Im unteren Teil dieser Figuren ist jeweils die Innenverzahnung mit dem Zahn 90 und dem eingefügten Federblech 89 aus Figur 9 dargestellt, ebenso wie das Federblech 95. Insgesamt liegen in Figur 11a alle Federbleche an in Umfangsrichtung gleichsinnig ausgerichteten Flanken der Innenverzahnung an. Dies führt dazu, dass der Ring 92 leicht in Umfangsrichtung verdreht werden kann, wodurch die Federbleche sich, wie im Fall der Figur 11b dargestellt, von der Verzahnung lösen können. Beim Zusammenstecken der Verzahnung ergibt sich hierdurch ein Problem, das dazu führt, dass entweder das Stecken verhindert oder behindert oder das Federblech entfernt oder zerstört wird.
Dieses Problem lässt sich beispielsweise, wie in Figur 12 dargestellt, durch eine azimutale Vorspannung des Rings 93 in Richtung der Pfeile 97, 98 lösen. Der Ring 93 weist zu diesem Zweck radiale Speichen auf, die gegenüber der ersten Welle 17, die das Aussengewinde trägt, verspannt werden können. Die Speichen selbst können dabei als Federn dienen, die sich an Widerlagern an der ersten Welle abstützen.
Figur 13 zeigt eine andere Maßnahme zur Sicherstellung einer problemlosen Montage der Anordnung in Form von Winkelblechen 99, 100, die an der von dem Ring 93 abgewandten Seite der Federbleche 101, 102 befestigt sind und je einen Zahn der Innenverzahnung stirnseitig wenigstens teilweise umgreifen. Auf diese Weise sind die hakenförmigen Enden der Federbleche an der Innenverzahnung abgestützt. Hierdurch werden die Federbleche bei dem durch den Pfeil 103 in Figur 13 angedeuteten Montagevorgang auch bei schlechter Positionierung der Verzahnungen zueinander nicht verbogen.

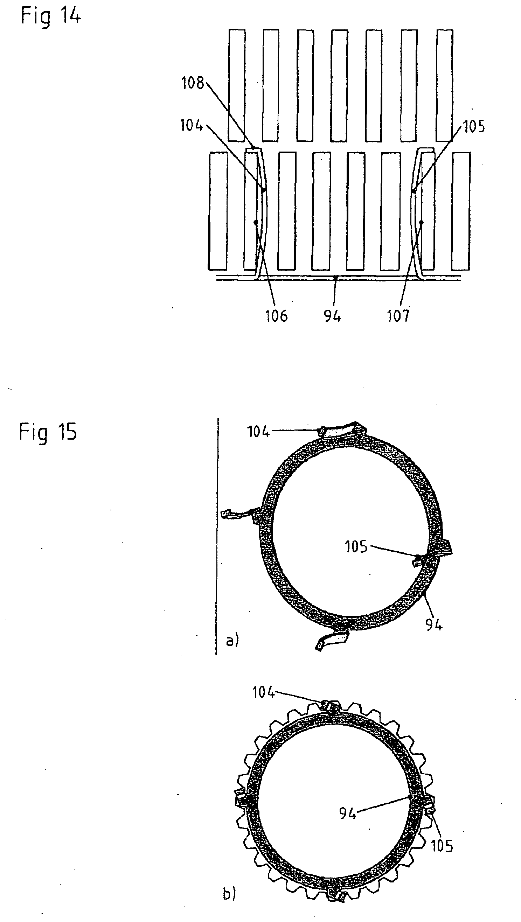

Eine eigenständige Vorspannung des Rings in Umfangsrichtung wird vollends entbehrlich durch die in der Figur 14 dargestellte Maßnahme, dass mehrere der Federbleche 104, 105 an in Umfangsrichtung gegensinnig ausgerichteten Flanken 106, 107 der Innenverzahnung anliegen. Die einzelnen Federbleche können damit in Umfangsrichtung gegeneinander verspannt sein, wodurch der Ring 94 selbsttätig zentriert wird.

Die Figur 15 zeigt diese Ausgestaltung in Teil a perspektivisch, in Teil b in einer Draufsicht auf die Innenverzahnung mit dem Ring 94.
Vorteilhaft erscheint es, zwei Paare, noch vorteilhafter, drei Paare von gegensinnigen Federblechen bei einer derartigen Konstruktion vorzusehen.

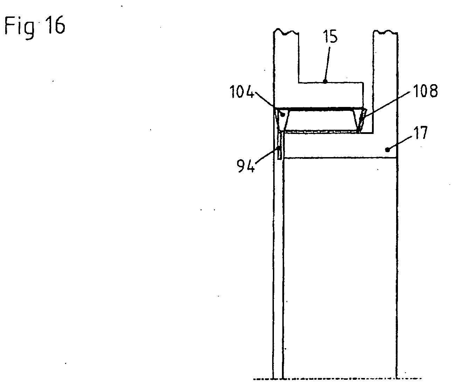

Figur 16 zeigt schließlich einen Schnitt durch eine gesteckte Verzahnung, wobei die Aussenverzahnung auf der ersten Welle 17, die Innenverzahnung auf der zweiten Welle 15 angeordnet ist. Es ist ein Federblech 104 dargestellt, das auf der linken Seite durch den Ring 94, auf der rechten Seite durch das Winkelblech 108 gesichert ist.
Damit ist die größtmögliche Sicherheit mit einer vereinfachten Montage bei geringem konstruktiven Aufwand verbunden.
Der Vollständigkeit halber sei erwähnt, dass die Erfindung ebenso wie oben beschrieben, in analoger Weise durch an der Aussenverzahnung angeordnete und verklemmte Federbleche verwirklicht werden kann.

### Bezugszeichenliste

- 1: erster Außenlamellenträger
- 2: zweiter Außenlamellenträger
- 3: erster Flansch
- 4: zweiter Flansch
- 5: Innenverzahnung
- 6: Innenverzahnung
- 7: Steckverzahnung
- 8: Steckverzahnung
- 9: Hohlwelle
- 10: Vollwelle
- 11: Kupplungsgehäuse
- 12: Torsionsschwingungsdämpfer
- 13: Sekundärelement
- 14: Primärelement
- 15: Primärflansch/ zweite Welle
- 15a: gesonderter Abschnitt der zweiten Welle
- 16: Steckverzahnung
- 17: Innenflansch/ erste Welle
- 18: biege-/taumelweiche Scheibe
- 19: Außenrandbohrung
- 20: Niete
- 21: Schwungmasse
- 22: Bohrung
- 23: Bohrung
- 24: Kurbelwelle
- 25: Gewindebohrung
- 26: Schraube
- 27: erstes Lamellenpaket
- 28: zweites Lamellenpaket
- 29: Außenlamelle
- 30: Außenlamelle
- 31: Außenverzahnung
- 32: Außenverzahnung
- 33: Innenlamelle
- 34: Druckplatte
- 35: Endplatte
- 36: Innenlamelle
- 37: Druckplatte
- 38: Innenverzahnung
- 39: Innenverzahnung
- 40: Innenlamellenträger
- 41: Außenverzahnung
- 42: Außenverzahnung
- 43: erster Betätigungskolben
- 44: zweiter Betätigungskolben
- 45: Öffnung
- 46: Öffnung
- 47: Öffnung
- 48: Sicherungsring
- 49: Druckkolben
- 50: Druckkolben
- 51: Kolben
- 52: Kolben
- 53: Schraubenfeder
- 53a: Schraubenfeder
- 54: Schraubenfeder
- 55: Kompensationskolben
- 56: Kompensationskolben
- 57: Umfangssteg
- 58: Umfangssteg
- 59: Ringelement
- 60: Sicherungsring
- 61: Kupplungsnabe
- 62: Träger
- 63: Hydraulikflüssigkeitskanal
- 64: Hydraulikflüssigkeitskanal
- 65: Hydraulikflüssigkeitskanal
- 66: Hydraulikflüssigkeitskanal
- 67: Nahtstelle
- 68: Pumpenantriebszahnrad
- 69: erster Hydraulikflüssigkeitsausgleichsraum
- 70: zweiter Hydraulikflüssigkeitsausgleichsraum
- 71: erster Hydraulikflüssigkeitsbetätigungsraum
- 72: zweiter Hydraulikflüssigkeitsbetätigungsraum
- 73: Kühlflüssigkeitsraum
- 74: Kupplungsglocke
- 75: erstes Kühlflüssigkeitsleitblech
- 76: zweites Kühlflüssigkeitsleitblech
- 77: Zylinder
- 78: Zylinder
- 80: Außenverzahnung
- 81: Blattfeder
- 82: Relativbewegung in Umfangsrichtung
- 83a: Schlitz
- 83b: Schlitz
- 83c: Schlitz
- 83d: Schlitz
- 83e: Schlitz
- 83f: Schlitz
- 84: Federstift
- 85: Federzylinder
- 86: axial begrenzter Abschnitt
- 87: O-Ring
- 88: O-Ring
- 89: Federblech
- 90: Zahn
- 91: Zahn
- 92: Ring
- 93: Ring
- 94: Ring
- 95: Federblech
- 96: Federblech
- 97: Vorspannungsrichtung
- 98: Vorspannungsrichtung
- 99: Winkelblech
- 100: Winkelblech
- 101: Federblech
- 102: Federblech
- 103: Einsteckvorgang
- 104: Federblech
- 105: Federblech
- 106: Flanke
- 107: Flanke
- 108: Winkelblech

## Patentansprüche

1. Kupplungs-Kopplungseinrichtung zur Übertragung eines Drehmoments zwischen einem Antriebselement und einer Kupplung mit einer ersten Welle (17) und einer diese umgebenden zweiten Welle, wobei die beiden Wellen mittels einer in Umfangsrichtung formschlüssigen Verbindung miteinander gekoppelt sind, die erste Welle (17) mit einer mit dem Antriebselement verbundenen, diesem gegenüber beweglichen Taumelscheibe (18) oder mit einer mit dem Antriebselement verbundenen Schwungscheibe (21) verbunden ist und wobei die zweite Welle mit einem Torsionsdämpfer verbunden ist,
**dadurch gekennzeichnet,**
**dass** wenigstens ein elastisches Element zur Erzeugung einer Vorspannung in der formschlüssigen Verbindung vorgesehen ist, wobei die erzeugte Vorspannung in einer Größenordnung ist, die ein Klappern und die entsprechende Geräuschentwicklung bei Laständerungen verhindert oder zumindest verringert, aber durch ein Spiel ein Ausgleich von kleinen Relativbewegungen zwischen der Kupplung und dem Antriebselement ermöglicht ist,
**dass** die Vorspannung in Bezug auf die erste und die zweite Welle (15, 17) in Umfangsrichtung gerichtet ist, wobei die beiden Wellen derart miteinander verbunden sind, dass sie bis zum Übersteigen einer bestimmten, in Umfangsrichtung wirkenden Kraft fest zueinander positioniert sind und bei Überschreiten dieser Kraft wenigstens eine Blattfeder (81) oder wenigstens ein Federblech (89, 95, 96; 102, 102; 104, 105) verformt wird, wobei die beiden Wellen (15, 17) sich soweit gegeneinander verdrehen können, dass die Verzahnungen in der einen oder anderen Drehrichtung aneinander anliegen,
wobei:
- die wenigstens eine Blattfeder (81) doppel-S-förmig gebogen ist, wobei eine Nut in der ersten Welle (17) in axialer Richtung verlaufend zwischen zwei Zähnen der Verzahnung angeordnet ist sowie ein parallel zu dieser verlaufende weitere Nut in der inneren Mantelfläche der zweiten Welle (15), wobei die Blattfeder (81) in beiden Nuten eingreift,
- oder das wenigstens eine Federblech (89, 95, 96; 101, 102; 104, 105) zwischen einen Zahn (90) einer Außenverzahnung und einen Zahn (91) einer Innenverzahnung eingefügt ist, wobei das Federblech (89, 95, 96; 101, 102; 104, 105) bogenförmig in der Mitte der Zahnflanke des Zahns (90) von diesem beabstandet ist und elastisch an die Flanke andrückbar ist.

2. Kupplungs-Kopplungseinrichtung nach Anspruch 1,
**dadurch gekennzeichnet,**
**dass** die erste Welle (17) eine Außenverzahnung trägt, die in eine Innenverzahnung der zweiten Welle (15) eingreift.

3. Kupplungs-Kopplungseinrichtung nach Anspruch 2,
**dadurch gekennzeichnet,**
**dass** ein Einlageelement (81) oder mehrere symmetrisch am Umfang der Verzahnung verteilte Einlageelemente (89, 95, 96; 101, 102; 104, 105) zwischen der Innenverzahnung und der Außenverzahnung angeordnet ist.

4. Kupplungs-Kopplungseinrichtung nach Anspruch 3,
**dadurch gekennzeichnet,**
**dass** die Einlageelemente (89, 95, 96; 101, 102; 104, 105) an einem gemeinsamen Ring (92, 93, 94) befestigt sind, dessen Durchmesser insbesondere etwa dem Durchmesser der Verzahnung entspricht.

5. Kupplungs-Kopplungseinrichtung nach Anspruch 3 oder einem der folgenden,
**dadurch gekennzeichnet,**
**dass** die Einlageelemente (89, 95, 96; 101, 102; 104, 105) Federbleche sind, die jeweils an eine Flanke eines Zahnes der Verzahnung angelegt werden können und insbesondere derart geformt ist, dass sie jeweils elastisch gegen die Flanke des Zahns, an dem sie anliegen, drückbar sind.

6. Kupplungs-Kopplungseinrichtung nach Anspruch 5,
**dadurch gekennzeichnet,**
**dass** mehrere am Umfang der Verzahnung verteilte Federbleche (89, 95, 96; 101, 102) an in Umfangsrichtung gleichsinnig ausgerichteten Flanken anliegen oder die am Umfang der Verzahnung verteilten Federbleche (104, 105) zum Teil an in Umfangsrichtung gegensinnig ausgerichteten Flanken (106, 107) der Verzahnung anliegen.

7. Kupplungs-Kopplungseinrichtung nach Anspruch 6, wobei die Federbleche an einem Ring befestigt sind,
**dadurch gekennzeichnet,**
**dass** der Ring (93) mittels federnder Mittel in Umfangsrichtung derart spannbar ist, dass die Federbleche gegen die gleichsinnig ausgerichteten Flanken gedrückt werden.

8. Kupplungs-Kopplungseinrichtung nach Anspruch 5 oder einem der folgenden, wobei die Federbleche (101, 102; 104, 105) an einem Ring (93, 94) befestigt sind,
**dadurch gekennzeichnet,**
**dass** die Federbleche (101, 102; 104, 105) wenigstens teilweise an ihren dem Ring (93, 94) in Axialrichtung der Wellen abgewandten Enden jeweils ein Winkelblech (99, 100, 108) aufweisen, das den jeweiligen Zahn, an dem das Federblech (101, 102; 104, 105) anliegt, zur Stirnseite hin umgreift.

9. Kupplungs-Kopplungseinrichtung nach einem der Ansprüche 1 bis 8,
**dadurch gekennzeichnet,**
**dass** die erzeugte Vorspannung 10 Nm bis 100 Nm beträgt.

## Claims

1. Clutch-coupling device for transmitting a torque between a drive element and a clutch, having a first shaft (17) and a second shaft enclosing the former, the two shafts being coupled together by means of a circumferentially positively interlocking connection, the first shaft (17) being connected to a swash plate (18) connected to the drive element and moveable in relation to the latter or being connected to a flywheel (21) connected to the drive element and the second shaft being connected to a torsion damper, **characterized in that** at least one elastic element is provided for generating a pretension in the positively interlocking connection, the pretensioning that is generated being of an order of magnitude that prevents or at least reduces rattling and the corresponding noise generation under load changes, but compensation of small relative movements between the clutch and the drive element being permitted by means of play, **in that** the pretension in respect of the first and the second shaft (15, 17) is directed in a circumferential direction, the two shafts being connected to one another in such a way that they are fixedly positioned in relation to one another until such time as a specific, circumferentially acting force is exceeded and, if this force is exceeded, at least one leaf spring (81) or at least one spring plate (89, 95, 96; 102, 102; 104, 105) being deformed, it being possible for the two shafts (15, 17) to be turned so far in opposition to one another that the toothings bear against one another in one or the other direction of rotation,
- the at least one leaf spring (81) being curved in a double-S shape, a groove in the first shaft (17) being designed to run axially between two teeth of the toothing and a further groove running parallel to the former being arranged in the inner circumferential surface of the second shaft (15), the leaf spring (81) engaging in both grooves,
- or the at least one spring plate (89, 95, 96; 101, 102; 104, 105) being inserted between a tooth (90) of an external toothing and a tooth (91) of an internal toothing, the spring plate (89, 95, 96; 101, 102; 104, 105) curving away from the tooth (90) in the middle of the tooth flank thereof and being able to be elastically pressed against the flank.

2. Clutch-coupling device according to Claim 1, **characterized in that** the first shaft (17) carries an external toothing, which meshes in an internal toothing of the second shaft (15).

3. Clutch-coupling device according to Claim 2, **characterized in that** an insert (81) or multiple inserts (89, 95, 96; 101, 102; 104, 105) distributed symmetrically around the circumference of the toothing is/are arranged between the internal toothing and the external toothing.

4. Clutch-coupling device according to Claim 3, **characterized in that** the inserts (89, 95, 96; 101, 102; 104, 105) are fixed to a common ring (92, 93, 94), the diameter of which is in particular approximately equal to the diameter of the toothing.

5. Clutch-coupling device according to Claim 3 or one of the claims following, **characterized in that** the inserts (89, 95, 96; 101, 102; 104, 105) are spring plates, which can each be applied against a flank of a tooth of the toothing and, in particular, are formed in such a way that they can each be pressed elastically against the flank of the tooth against which they bear.

6. Clutch-coupling device according to Claim 5, **characterized in that** a plurality of spring plates (89, 95, 96; 101, 102) distributed over the circumference of the toothing bear on flanks oriented in the same circumferential direction, or the spring plates (104, 105) distributed over the circumference of the toothing bear partly on flanks (106, 107) of the toothing oriented in opposite circumferential directions.

7. Clutch-coupling device according to Claim 6, the spring plates being fixed to a ring, **characterized in that** the ring (93) can be circumferentially tensioned by spring means in such a way that the spring plates are pressed against the flanks oriented in the same direction.

8. Clutch-coupling device according to Claim 5 or one of the claims following, the spring plates (101, 102; 104, 105) being fixed to a ring (93, 94), **characterized in that** at least some of the spring plates (101, 102; 104, 105) at their ends remote from the ring (93, 94) in the axial direction of the shafts each have an angle plate (99, 100, 108), which grips around the respective tooth on which the spring plate (101, 102; 104, 105) bears, towards its end face.

9. Clutch-coupling device according to one of Claims 1 to 8, **characterized in that** the generated pretension is 10 Nm to 100 Nm.

## Revendications

1. Dispositif d'accouplement d'embrayage pour le transfert d'un couple entre un élément d'entraînement et un embrayage, comprenant un premier arbre (17) et un deuxième arbre entourant celui-ci, les deux arbres étant accouplés l'un à l'autre au moyen d'une connexion par engagement positif dans la direction périphérique, le premier arbre (17) étant connecté à un disque en nutation (18) connecté à l'élément d'entraînement et déplaçable par rapport à celui-ci, ou à un plateau oscillant (21) connecté à l'élément d'entraînement, et le deuxième arbre étant connecté à un amortisseur de torsions,
**caractérisé en ce**
**qu'**au moins un élément élastique est prévu pour produire une précontrainte dans la connexion par engagement positif, la précontrainte produite étant d'un ordre de grandeur qui empêche ou au moins réduit un cliquetis et le développement de bruit correspondant lors de variations de charge, mais une compensation de petits mouvements relatifs entre l'embrayage et l'élément d'entraînement étant permise par le biais d'un jeu,
en ce que la précontrainte par rapport au premier et au deuxième arbre (15, 17) est orientée dans la direction périphérique,
les deux arbres étant connectés l'un à l'autre de telle sorte qu'ils soient positionnés fixement l'un par rapport à l'autre jusqu'à surmonter une force déterminée agissant dans la direction périphérique, et au moment du dépassement de cette force au moins un ressort à lame (81) ou au moins une tôle élastique (89, 95, 96 ; 102, 102 ; 104, 105) étant déformé(e), les deux arbres (15, 17) pouvant tourner l'un par rapport à l'autre dans une mesure telle que les dentures s'appliquent l'une contre l'autre dans l'un ou l'autre sens de rotation,
l'au moins un ressort à lame (81) ayant une courbure en forme de double S, une rainure dans le premier arbre (17) s'étendant dans la direction axiale étant disposée entre deux dents de la denture et une rainure supplémentaire s'étendant parallèlement à celle-ci étant réalisée dans la surface d'enveloppe interne du deuxième arbre (15), le ressort à lame (81) s'engageant dans les deux rainures,
ou l'au moins une tôle élastique (89, 95, 96 ; 101, 102 ; 104, 105) étant insérée entre une dent (90) d'une denture extérieure et une dent (91) d'une denture intérieure, la tôle élastique (89, 95, 96 ; 101, 102 ; 104, 105) de forme courbe au centre du flanc de dent de la dent (90) étant espacée de celle-ci et pouvant être pressée élastiquement contre le flanc.

2. Dispositif d'accouplement d'embrayage selon la revendication 1,
**caractérisé en ce que**
le premier arbre (17) porte une denture extérieure qui vient en prise dans une denture intérieure du deuxième arbre (15).

3. Dispositif d'accouplement d'embrayage selon la revendication 2,
**caractérisé en ce**
**qu'**un élément d'insert (81) ou plusieurs éléments d'insert (89, 95, 96 ; 101, 102 ; 104, 105) répartis symétriquement sur la périphérie de la denture sont disposés entre la denture intérieure et la denture extérieure.

4. Dispositif d'accouplement d'embrayage selon la revendication 3,
**caractérisé en ce que**
les éléments d'insert (89, 95, 96 ; 101, 102 ; 104, 105) sont fixés à une bague commune (92, 93, 94) dont le diamètre correspond notamment approximativement au diamètre de la denture.

5. Dispositif d'accouplement d'embrayage selon la revendication 3 ou selon l'une quelconque des revendications suivantes,
**caractérisé en ce que**
les éléments d'insert (89, 95, 96 ; 101, 102 ; 104, 105) sont des tôles élastiques qui peuvent être appliquées respectivement contre un flanc d'une dent de la denture et qui sont notamment formées de telle sorte qu'elles puissent être pressées respectivement élastiquement contre les flancs de la dent contre laquelle elles s'appliquent.

6. Dispositif d'accouplement d'embrayage selon la revendication 5,
**caractérisé en ce que**
plusieurs tôles élastiques (89, 95, 96 ; 101, 102) réparties sur la périphérie de la denture s'appliquent contre des flancs orientés dans le même sens dans la direction périphérique ou les tôles élastiques (104, 105) réparties sur la périphérie de la denture s'appliquent en partie contre des flancs (106, 107) de la denture orientés en sens contraire dans la direction périphérique.

7. Dispositif d'accouplement d'embrayage selon la revendication 6, dans lequel les tôles élastiques sont fixées sur une bague,
**caractérisé en ce que**
la bague (93) peut être serrée par le biais de moyens élastiques dans la direction périphérique de telle sorte que les tôles élastiques soient pressées contre les flancs orientés dans le même sens.

8. Dispositif d'accouplement d'embrayage selon la revendication 5 ou selon l'une quelconque des revendications suivantes, dans lequel les tôles élastiques (101, 102 ; 104, 105) sont fixées à une bague (93, 94),
**caractérisé en ce que**
les tôles élastiques (101, 102 ; 104, 105) présentent au moins en partie, au niveau de leurs extrémités opposées à la bague (93, 94) dans la direction axiale des arbres, à chaque fois une tôle coudée (99, 100, 108) qui vient en prise vers le côté frontal autour de la dent respective contre laquelle s'applique la tôle élastique (101, 102 ; 104, 105).

9. Dispositif d'accouplement d'embrayage selon l'une quelconque des revendications 1 à 8,
**caractérisé en ce que**
la précontrainte produite vaut 10 Nm à 100 Nm.
